# EUROPEAN PATENT APPLICATION

(11) **EP 2 335 908 A1**
(43) Date of publication of application: **22.06.2011**
(21) Application number: 09015734.8
(22) Date of filing: 18.12.2009
(51) Int. Cl.: B29C 70/48, B29C 70/54, B29C 33/00

(54) **Arrangement to build up a blade**

(71) Applicant: SIEMENS AKTIENGESELLSCHAFT, 80333 München (DE)
(72) Inventor: Stiesdal, Henrik, 5000 Odense C (DK)

(57) **Abstract**

According to the invention a first mould is arranged to support a number of layers, while the layers are arranged to build up a three-dimensional shape of the blade. At least a second mould is connected with the first mould, while the blade is arranged inside a cavity. The cavity is formed by the connected moulds. The first and the second mould are arranged and constructed in a way that injected matrix material penetrates the layers inside the cavity to build up the blade, while the matrix material cures. One of the moulds contains at least one flow duct, which is partly integrated into an inner surface of the mould. Thus the flow duct is arranged into an inner surface of the cavity. The flow duct is arranged and constructed to guide the injected matrix material.

## Description

The invention relates to an arrangement to build up a blade.

Preferably the invention is used to build up a wind turbine blade.

Documents WO 2006/058540 A1, WO 2006/058541 A1 and document EP 1310351 A1 disclose some methods to manufacture or build up a blade. The blade is built up by fibre-reinforced laminated structures. The fibre-reinforced laminated structures are arranged in a mould-structure. Resin is injected into the mould-structure. For this purpose a distribution system is used.
The fibre-reinforced laminates are impregnated/saturated by the resin. As the distribution system is located between the fibre-reinforced laminated structures it is left inside after the resin cured out.

Document EP 2 106 900 A discloses a method, where the used distribution system is not inside the blade. The structure, which is used to build up the blade, shows two channels, which are located along the entire length of the mould. The channels are arranged on a surface of an actual volume, which surrounds the blade. The channels are part of another volume, which is used to apply vacuum to the blade. The channels are kept free of any material until the injection of resin starts. Thus the resin is allowed to run through the channels from an inlet port to a far end of the mould.

Document EP 1 310 351 A1 discloses a method, where resin is injected into flow pipes of a closed mould. The injection is controlled by a pressure difference.

These known methods show a common disadvantage. It is extremely difficult to control the flow of resin within the laminated structure in a precise manner.

It is therefore the object of the present invention to provide an improved method and to provide an improved arrangement to build up a blade, especially a wind turbine blade.

This object is achieved by the features of claim 1 and by the features of claim 10.

Preferred configurations of the invention are object of the dependent claims.

According to the invention an arrangement is provided to build up a blade. A first mould is arranged to support a number of layers, while the layers are arranged to build up a three-dimensional shape of the blade. At least a second mould is connected with the first mould, while the blade is arranged inside a cavity. The cavity is formed by the connected moulds. The first and the second mould are arranged and constructed in a way that injected matrix material penetrates the layers inside the cavity to build up the blade, while the matrix material cures. One of the moulds contains at least one flow duct, which is partly integrated into an inner surface of the mould. Thus the flow duct is arranged into an inner surface of the cavity. The flow duct is arranged and constructed to guide the injected matrix material.

Preferably a technical vacuum is applied to at least one of the flow ducts to guide the matrix material (resin or liquid polymer). Thus an uniform and fast flow of the matrix material is ensured.

Preferably the technical vacuum is used additionally, to suck arranged blade-material (fiber mats or single fibers for example) to a certain part of the mould. Thus if the blade material is rolled onto the supporting mould, it is held in place due to the technical vacuum.

Preferably a reservoir is used to store and to provide matrix material to the moulds. Thus a sufficient amount of matrix material is ensured for the production of the blade.

Preferably a flow control valve is used to ensure that a certain amount of matrix material is provided to the moulds in a controlled way. Thus predefined levels of the matrix material into the cavity can be reached easily.

Preferably a stop cock is used to ensure that the flow of matrix material to the duct can be stopped if needed.

Preferably a number flow ducts, which are used to remove air from the cavity, is higher than a number of flow ducts, which are used to provide the matrix material into the cavity. Thus an uniform distribution of matrix material is achieved.

Preferably the flow duct contains a lining, which is used to guide the matrix material. The lining is constructed and arranged into the flow duct in a way that the lining is allowed to be removed after the production of the blade is finished.

Preferably the lining is constructed in a way that its structure is open throughout its length. Thus matrix material is allowed to flow from the lining to the blade-structure to penetrate the layers of the blade.

Preferably the lining contains openings along its length. Thus matrix material is allowed to flow from the lining to the blade-structure to penetrate the layers of the blade.

Due to this matrix material will flow along the lining and into the layers of the blade. If a sufficient amount of matrix material has penetrated the layers, the injection is stopped and the matrix material will harden to finish the blade-production process.

The removable lining prevents contacts between the matrix material and the used moulds. Thus only little additional efforts are needed to clean and to prepare the moulds for a new moulding process.

Preferably the lining is made of a flexible material like rubber or silicone. Thus the lining can be released from the hardened matrix material quite easily. Due to this the lining can be re-used.

Preferably the lining is pre-processed with silicone oil, grease, etc. before it is used for a moulding process.

Preferably the lining is made of a non-flexible material like PVC or wood. Thus a cheep material is used, therefore there is no demand for a re-use of the lining. The blade production is faster as the lining is disposed after its use, no further pre-processing of the lining is needed.

Preferably the flow duct is constructed and/or prepared in a way that the lining can be arranged into the flow duct very easily. For example easy-slip surfaces or applied agents like silicone oil is used. Thus the lining is allowed to slip easily from the flow duct when the blade production process is finished and the cavity is opened.

By the use of an easy-slip surface it is ensured that the lining and the mould do not stick together. Thus the process of removing the mould from the blade is easier.

Preferably the open lining is constructed and prepared in a way that it shows an easy-slip surface. This may be achieved by an agent, which is applied to the lining. Preferably one portion of the open lining is flush with the surface of the mould in the enclosed space. Hereby it is ensured that the lining does not influence the surface structure and form of the composite material in the mould.

Due to the flow ducts surplus matrix material will be arranged along the lining of the flow ducts. If the cavity is opened (by removing one of the moulds) the surplus matrix material will be arranged at the surface of the blade. The surplus matrix material is connected with the blade.

For an optimized blade-surface this surplus matrix material often needs to be removed.

Preferably the lining has a section or portion, which limits the passage-area between the flow duct and the cavity.
Thus the amount of matrix material is controlled in its flow from the flow duct / lining into the fibre reinforced laminated structure of the blade.

The section is constructed and arranged in a way that surplus matrix material, which extends over the surface of the blade, can be removed easily. For example a predefined breaking edge is defined by the section.

The invention is described in more detail by help of some drawings. They show preferred configurations and do not limit the scope of the invention.
- FIG 1: shows the arrangement according to the invention in a schematically view,
- FIG 2: shows, in reference to FIG 1, a preferred configuration of the invention,
- FIG 3: shows, in reference to FIG 1 and to FIG 2, the flow of the matrix material,
- FIG 4: shows a part of the blade, where surplus matrix material extends from the surface of the blade,
- FIG 5: shows in reference to FIG 1 a flow duct, which contains a lining according to the invention,
- FIG 6: shows a part of the blade, where surplus matrix material extends from the surface of the blade, if a lining is used according to the invention, and
- FIG 7: shows different cross sections of the lining, referring to FIG 6.

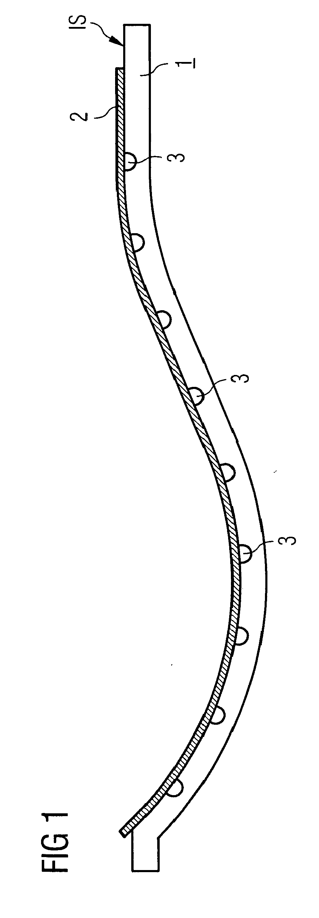

FIG 1 shows the arrangement according to the invention.

A bottom part of a mould 1 is used to support a number of layers 2, which are piled like a sandwich. The layers 2 are piled in a way that the three-dimensional shape (3D-shape) of the blade is achieved.

The piled layers may contain fiber-reinforced laminates and/or balsa wood and/or composite material and/or other useful materials. The layers are arranged and formed in a way that they are connected by an injected matrix material. Matrix material may contain resin, glue or any other kind of "connecting" material.

After the 3D-shape of the blade is finished by the stacked layers, a top mould is connected with the bottom mould. Thus a cavity is built by the two moulds, which contains the blade. Later resin is injected into the cavity to combine the layers of the blade. For this injection pressure or a technical vacuum is applied to the mould-system.

According to the invention at least one mould 1 contains at least one flow duct 3. The flow duct 3 is only partly integrated into the inner surface IS of the mould 1.

After the mould 1 is connected with at least another mould as described above the technical vacuum or the pressure is applied to the flow duct 3. Accordingly the flow duct 3 is used to inject a matrix material, like resin or a liquid polymer, into the closed mould-system.

Preferably each used flow duct 3 extends along the entire length of the mould 1.

Preferably some of the used flow ducts 3 are arranged to be used as an injection duct. This allows matrix material like resin to be injected into this flow ducts.

Preferably some of the used flow ducts 3 are arranged to be used as a drain duct. Thus surplus matrix material is allowed to leave the mould system if needed.

The layers of the used fibre reinforced laminated material is laid out manually or automatically in a way that a desired composite structure is achieved.

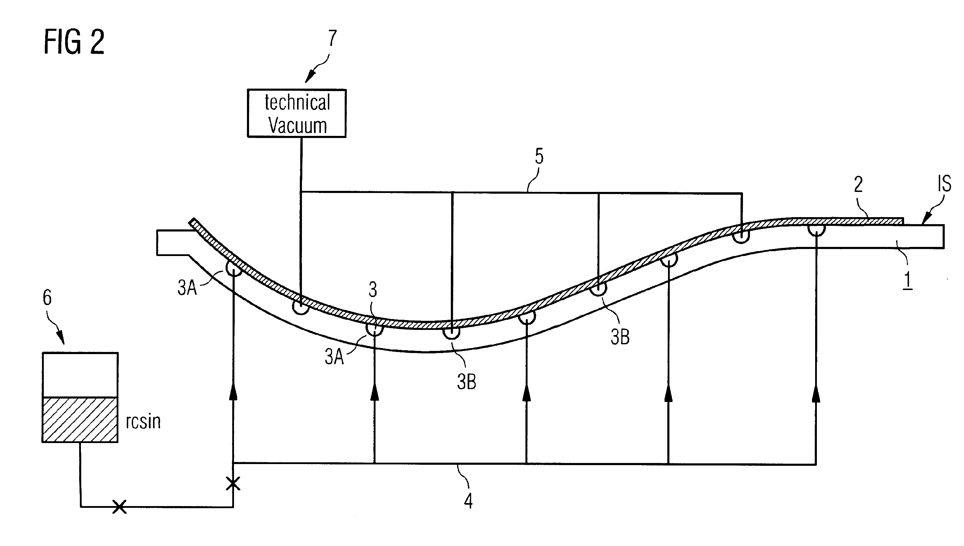

FIG 2 shows, in reference to FIG 1, a preferred configuration of the invention.

As described above resin is applied to a number of first flow ducts 3A, while a technical vacuum is applied to a number of second flow ducts 3B.

The flow ducts 3A are part of a vacuum or a pressure distribution system 5.

The flow ducts 3B are part of a matrix material or resin distribution system 4.

The distribution system 5 preferably contains various components like one or more vacuum units (not shown here). These vacuum units are used to generate the technical vacuum or they are used to generate low pressure. The distribution system 5 may also contain flexible hoses, pipes, couplings and seals to ensure that the distribution system is tight.

The distribution system 5 preferably is built up in a way that its reconfiguration is allowed. The reconfiguration may be done in dependency of certain system-requirements or in dependency of fault parts within the distribution system 5.

Preferably the flow ducts 3A, 3B are partly integrated in the mould 1. For example they are partly integrated tubes.

Preferably the technical vacuum or the low pressure is controlled by an applied open-loop control or by an applied closed-loop control. For this purpose the pressure (or pressure differences) is measured within the flow ducts 3A and/or within the flow ducts 3B.

Preferably the pressure is controlled during the matrix material is injected.

Preferably the distribution system 5 is connected to one flow duct, while this flow duct is located substantially at the leading edge or at the trailing edge of the blade.

Preferably the distribution system 4 of the matrix material / resin contains a reservoir 6.

Preferably the distribution system 4 contains one or more reservoirs 6, flexible hoses, pipes, couplings and/or seals. These components are arranged to ensure tight connections.

Preferably the matrix material is injected into the distribution system 4 by an applied pressure. Thus an increased pressure difference between the flow ducts 3A, where the matrix material is injected, and the flow ducts 3B, where surplus matrix material may leave the mould system is established. Thus an even higher flow rate is established.

Preferably the distribution system 4 and/or the distribution system 5 contain a flow control valve. This valve is arranged in a way that the amount and the flow of the matrix material and/or the amount of evacuated air are/is measured for control-purposes.

Preferably the distribution system 4 and/or the distribution system 5 contain a stop cock. The cock is used to control the flow of the injected matrix material and/or the flow of the evacuated air. The flow is stopped for example if a sufficient amount of matrix material was injected or it is stopped if an error (like a leaking hose) is detected.

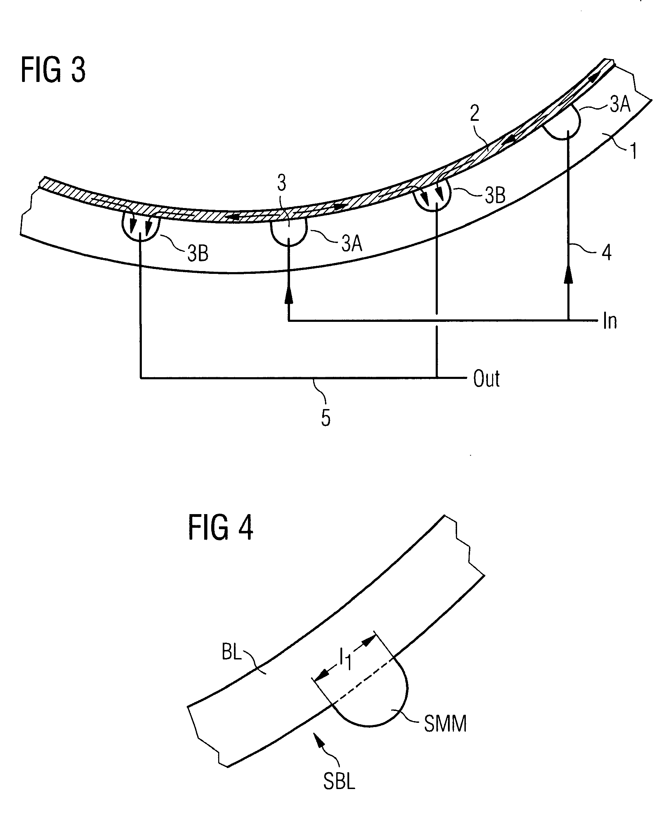

FIG 3 shows, in reference to FIG 1 and to FIG 2, the flow of the matrix material.

Whenever a blade, which contains components as described above, is manufactured the flow of the matrix material is of most importance. The matrix material needs to flow in a substantially free manner. Thus a uniform distribution of the matrix material is achieved in and between the used blade components.

Preferably the matrix material is injected via an inlet IN into the distribution system 4. Thus the matrix material is brought into a number of the flow ducts 3A.

The flow ducts 3 and their surface are constructed in a way that the matrix material is allowed to flow substantially free inside.

Furthermore the matrix material is injected into the piled layers 2 thus the blade-structure is permeated.

Surplus liquid polymer exits the blade-structure via a number of other flow ducts 3B - for example those flow ducts, which are part of the distribution system 5 being used to apply the technical vacuum.

FIG 4 shows a part of a blade BL, where surplus matrix material SMM extends from the surface SBL of the blade BL.

This surplus matrix material SMM needs to be removed to optimize the surface SBL of the blade BL.

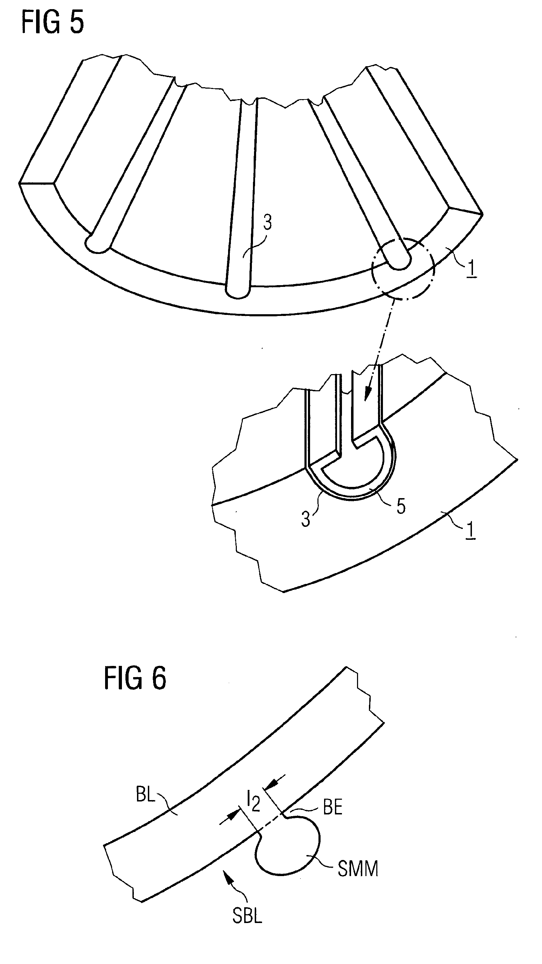

FIG 5 shows in reference to FIG 1 a flow duct 3, which contains a lining 5 according to the invention.

The lining 5 is profiled and fits into the dedicated flow duct 3.

Preferably the lining 5 does not extend above the flow duct 3 and the inner surface of the mould 1. So it does not influence the curvature of the fibre glass material laid down in the mould.

When covered by fibre glass material, for example, the lining 5 forms an injection channel for matrix material like resin, as it forms a hollow profile.

During the blade-production-process resin is injected into the composite structure through this hollow profile and it is distributed along the extent of the lining 5. Thus an uniform distribution is obtained.

FIG 6 shows in reference to FIG 5 a part of the blade BL, where surplus matrix material SMM extends from the surface SBL of the blade BL, if a lining 5 is used according to the invention.

Due to the cross-section of the lining 5 a predefined breaking edge BE is defined. This breaking edge BE allows removing of the surplus material SMM from the blade BL very easily.

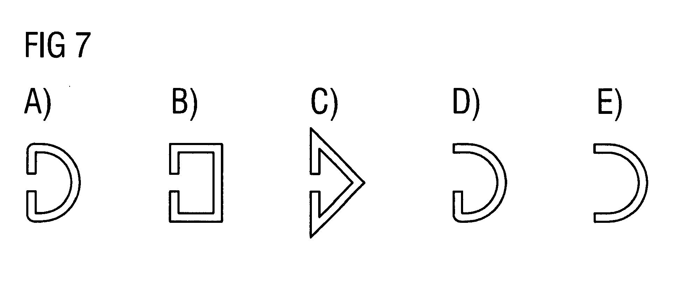

FIG 7 shows different cross sections of the lining, referring to FIG 5 and to FIG 6.

## Claims

1. Arrangement to build up a blade,
- where a first mould is arranged to support a number of layers, while the layers are arranged to build up a three-dimensional shape of the blade,
- where at least a second mould is connected with the first mould, while the blade is arranged inside a cavity, which is formed by the connected moulds,
- where the first and the second mould are arranged and constructed in a way that injected matrix material penetrates the layers inside the cavity to build up the blade,
**characterised in,**
- **that** one of the moulds contains at least one flow duct, which is partly integrated into an inner surface of the mould, and
- where the flow duct is arranged and constructed to guide the injected matrix material.

2. Arrangement according to claim 1,
- where the flow duct is constructed as a recess, and/or
- where the flow duct extends along the mould.

3. Arrangement according to claim 1, where the flow duct is located at the leading edge and/or at the trailing edge of the blade.

4. Arrangement according to claim 1, where a first distribution system is connected with a number of flow ducts, while the flow ducts are used to evacuate air from the cavity.

5. Arrangement according to claim 4, where the first distribution system is constructed and arranged in a way that a technical vacuum is applied to the cavity.

6. Arrangement according to claim 1 or to claim 5, where a second distribution system is connected with a number of flow ducts, while the flow ducts are arranged to inject the matrix material.

7. Arrangement according to claim 6, where the second distribution system is constructed and arranged in a way that due to the technical vacuum and/or due to an applied pressure the matrix material is injected into the cavity.

8. Arrangement according to claim 6 or to claim 7, where a reservoir with matrix material is connected with the flow ducts of the second distribution system.

9. Arrangement according to claim 1, where at least one flow duct is connected with a valve, while the valve is constructed and arranged in a way that the flow of the matrix material is controlled.

10. Arrangement according to claim 1, where at least one flow duct is connected with a cock, while the cock is constructed and arranged in a way that the flow of the matrix material is controlled.

11. Arrangement according to claim 4 or to claim 6, where the number of flow ducts, which are connected with the first distribution system, exceeds the number of flow ducts, which are connected with the second distribution system.

12. Arrangement according to claim 6, where the matrix material is injected by an applied pressure in the flow ducts of the second distribution system.

13. Arrangement according to claim 1, where the blade is a blade of a wind turbine.

14. Arrangement according to claim 1, where the flow duct contains a lining, which is constructed and arranged into the flow duct in a way that matrix material is guided from th flow duct into the cavity and that the lining is removable out from the flow duct after the production of the blade is finished.

15. Arrangement according to claim 14,
- where the lining is constructed in a way that its structure is open throughout its length or
- where the lining contains openings along its length,
- thus matrix material is allowed to flow from the lining to the blade-structure to penetrate the layers of the blade.

16. Arrangement according to claim 14 or claim 15, where the lining contains a section,
- which is constructed in a way that it limits the passage-area between the flow duct and the cavity, and/or
- which defines a breaking edge, to allow removing of surplus matrix material, which extends over the surface of the blade.
